# EUROPEAN PATENT SPECIFICATION

(11) **EP 3 567 483 B1**
(45) Date of publication and mention of the grant of the patent: **28.10.2020**
(21) Application number: 18880058.5
(22) Date of filing: 02.04.2018
(51) Int. Cl.: G06F 9/54, G06F 9/50, H04L 29/08

(54) **METHOD FOR PROCESSING SERVICE DATA, AND NETWORK DEVICE**
VERFAHREN ZUR VERARBEITUNG VON DIENSTDATEN UND NETZWERKVORRICHTUNG
PROCÉDÉ DE TRAITEMENT DES DONNÉES DE SERVICE, ET DISPOSITIF RÉSEAU

(30) Priority: 13.03.2018 CN 201810205185
(43) Date of publication of application: 13.11.2019
(73) Proprietor: Wangsu Science & Technology Co., Ltd., Shanghai 200030 (CN)
(72) Inventor: XU, Jiaxuan, Shanghai 200030 (CN); CAO, Zhiwen, Shanghai 200030 (CN)
(74) Representative: de Arpe Fernandez, Manuel
(86) International application number: PCT/CN2018/081555
(87) International publication number: WO 2019/174074

(56) References cited:
- CN-A- 102 591 715
- CN-A- 106 095 580
- US-A1- 2017 322 828
- Ning Fengfeng: "Network IO Optimization in the context of virtualization", Master Thesis, 15 June 2015 (2015-06-15), pages 1-50, XP009516642, ISSN: 1674-0246

## Description

### FIELD OF THE DISCLOSURE

The present disclosure generally relates to the technical field of virtualization and, more particularly, relates to a method and a network device for processing service data.

### BACKGROUND

Vhost/Virtio technology provides a para-virtualized device abstract interface specification. DPDK (Data Plane Development Kit) framework mostly utilizes the Vhost/Virtio for the transmission and reception of service data. In the projects of DPDK technical transformation, there may be a plurality of virtual processing progresses which simultaneously process the transmitted and received service data, and each processing progress may implement data exchange with a physical network interface card (NIC) through the Vhost/Virtio.

As an example, a protocol stack in a processing progress may encapsulate and decapsulate service data based on a multi-layer communication protocol in a network. In order to save CPU interrupt time and data reading time during the process of service data resolution by a CPU kernel protocol stack, technicians may utilize DPDK to modify the processing progress. After the physical NIC receives the service data, the NIC driver reloaded by the DPDK framework does not notify the CPU through an interrupt request, instead, the service data are directly copied to an application layer and then the service data are decapsulated through a separate protocol stack.

In the process of implementing the present invention, the inventors have found that the conventional technology has at least the following problems.

The Vhost only allows one processing progress to call the Virtio to establish a communication connection at a time. A plurality of processing progresses need to alternatively call the Virtio and the Vhost frequently to establish communication connections which may implement the transmission and reception of the service data. Thus, the processing resources of network devices are greatly wasted, and the efficiency of processing service data is reduced.

The document CN106095580 A discloses a data packet efficient transmitting method for a para-virtualized network interface card. The document CN102591715 A relates to an implementing method for optimizing the network performance of a virtual machine by using a multiqueue technology. The document US2017322828 A1 discloses an approach that contemplates systems and methods to support virtio-based data packet path optimization for live virtual machine migration for Linux. The Master Thesis "Network IO Optimization in the context of virtualization" by Ning Fengfeng is published on 15 June 2015.

### BRIEF SUMMARY OF THE DISCLOSURE

To solve the problems in the existing technology, embodiments of the present invention provide a method and a network device for processing service data according to the claims.

The beneficial effects of the technical solution provided by embodiments of the present invention are: in embodiments of the present invention, when the first processing progress starts, it calls the Virtio to establish a communication connection with the Vhost deployed in the virtual switch; the first processing progress applies for the target storage space and divides the target storage space into a plurality of storage spaces; when the second processing progress starts, it determines the target sub-storage space in the plurality of sub-storage spaces and processes the service data based on the target sub-storage space. In such way, a processing progress calls the Virtio to establish a communication connection with the Vhost interface, and a plurality of processing progresses use the above same communication connection to implement the transmission and reception of the service data through the shared storage space method. There is no need to use the plurality of processing progresses to call the Virtio alternatively to establish the communication connection with the Vhost interface, so that processing resources of the network device is saved and the efficiency of processing the service data is ensured.

Whenever the term "embodiment" is used in relation to matter not falling within the scope of the claims, it should be understood as referring to an example useful for understanding the invention.

### BRIEF DESCRIPTION OF THE DRAWINGS

To more clearly illustrate the technical solutions of the present disclosure, the accompanying drawings to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.
FIG. 1 illustrates a frame diagram of processing service data according to embodiments of the present disclosure;
FIG. 2 illustrates a flowchart of a method for processing service data according to embodiments of the present disclosure;
FIG. 3 illustrates a structural schematic of a shared storage space according to embodiments of the present disclosure; and
FIG. 4 illustrates a structural schematic of a network device according to embodiments of the present disclosure.

### DETAILED DESCRIPTION

To more clearly describe the objectives, technical solutions and advantages of the present invention, the present invention is further illustrated in detail with reference to the accompanying drawings in conjunction with embodiments.

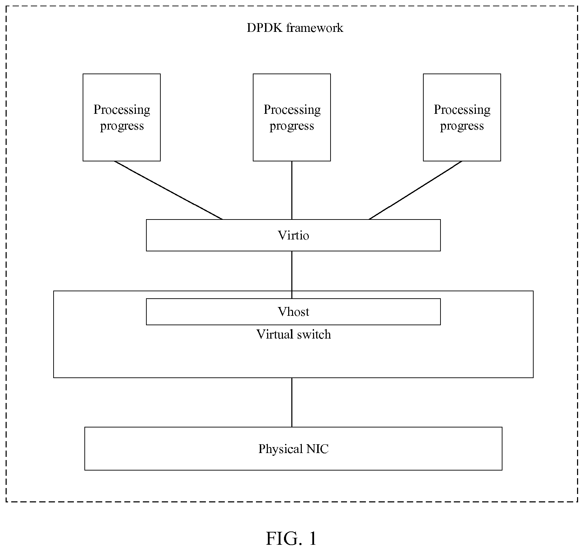

Embodiments of the present invention provide a method for processing service data. The execution entity of the method may be a network device, and the network device may be any devices with data transmission and reception functions such as a computer or a server. The network device may execute a project progress and a plurality of processing progresses having at least one network service. Each processing progress may be used to process the service data of the project progress. The processing may be the resolution of the service data (including encapsulation and decapsulation) as mentioned in the background section or may be other data processing. The network device may utilize DPDK technology to implement the above virtualization process and support DPDK framework to set up a virtual switch. One end of the virtual switch may be connected to the physical NIC of a network device and another end may exchange data with the processing progresses through the Vhost/Virtio interface. The Vhost/Virtio under the DPDK framework has high performance on data throughput and may serve a plurality of processing progresses described above. Each processing progress may implement data exchange with the physical NIC through the Vhost/Virtio interface, and thus implement the transmission and reception of service data, where the specific frame diagram refers to FIG. 1. The network device may include a processer, a memory and a transceiver. The processor may be used to process service data in the following processes, and the memory may be used to store required data and the generated data in the following processes, and the transceiver may be used to receive and transmit relevant data in the following processes. In this embodiment, the resolution process of the service data is used as an example for description, and other processing procedures are similar and are not described in detail.

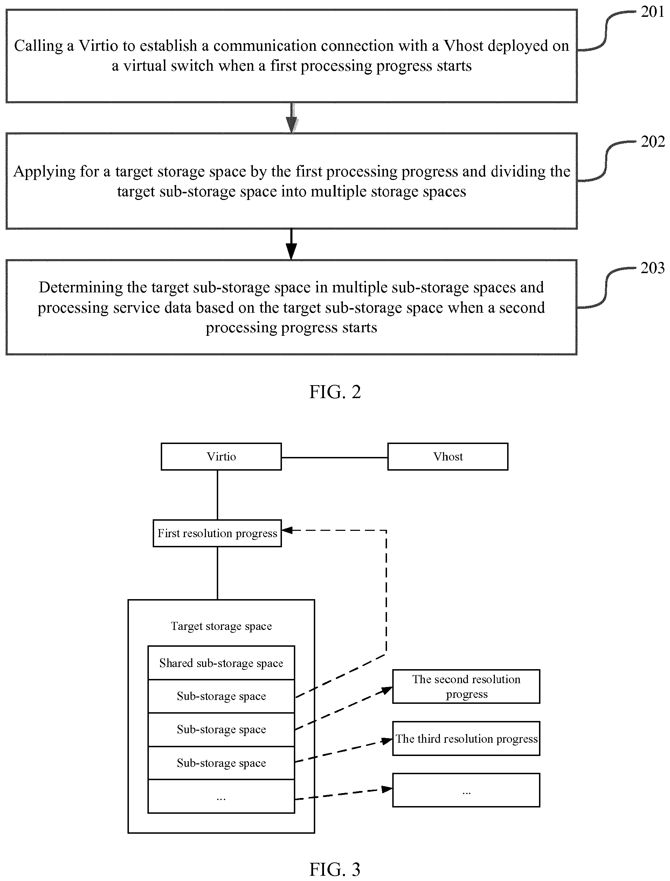

The process flow described in FIG. 2 is illustrated in detail using the resolution of the service data as an example in conjunction with specific embodiments. The content may be the following.

Step 201, when the first processing progress starts, the Virtio is called to establish a communication connection with the Vhost deployed in the virtual switch.

In the scenario of the service data resolution, the processing progress may be independently executed on the CPU of the network device, which may have the function of protocol stack. The independent protocol stack may be developed by technicians on the network device side and may be different from the original kernel protocol stack on the CPU.

In one embodiment, when the first (or primary) processing progress starts, whether the first processing progress itself is the primary (first started) data processing progress may be determined. If it is determined that the first processing progress itself is the primary data processing progress, the initialization process may be executed. Specifically, the Virtio of the virtual NIC may be called to establish a linux domain socket communication connection with the Vhost deployed in the virtual switch. If the first processing progress is not the primary processing progress, the following step 203 may be used as a reference to search the corresponding sub-storage space. It should be noted that, technicians may pre-specify the processing progress of calling Virtio to establish a communication connection with the Vhost interface. Then the specified result is recorded to a configuration file and the configuration file is loaded into the network device. In such way, the first processing progress may search the above configuration file after its start to determine whether to call the Virtio to establish a communication connection with the Vhost interface.

Step 202, the first processing progress applies for a target storage space and divides the target storage space into a plurality of sub-storage spaces.

In one embodiment, after the first processing progress calls the Virtio to establish a communication connection with the Vhost interface, a shared structure may be created, that is, a target storage space is applied for from the operating system of the network device and the target storage space may be a shared storage space for a plurality of processing progresses. Further, the first processing progress may divide the target storage space into a plurality of sub-storage spaces and each sub-storage space may be provided to one processing progress to store the service data. Next, each processing progress may correspond to unique identification information, and the first processing progress may label each sub-storage space according to the identification information when the first processing progress is dividing sub-storage space. It should be understood that, the first processing progress may also be used to process the service data as well, so the sub-storage space corresponding to the first processing progress also exists in the target storage space. It is worth mentioning that each sub-storage space may be further divided into two parts, one part is used to store received service data to-be-decapsulated and another part is used to store the encapsulated service data to be transmitted.

Optionally, the first processing progress may create a plurality of sub-storage spaces according to the total number of processing progresses. Correspondingly, the processing of step 202 may be the following: reading the preset configuration file to determine the total number of processing progresses by the first processing progress; and applying for a target storage space by the first processing progress and dividing the target storage space into a plurality of sub-storage spaces according to the total number of processing progresses.

In one embodiment, technicians may record the total number of processing progresses running on the network device into a configuration file in advance, and then store the configuration file into the network device. In such way, when the first processing progress creates the shared structure, the preset configuration file may be read first to determine the total number of the processing progresses on the network device. Further, the first processing progress may divide the target storage space into a plurality of sub-storage spaces after applying the target storage space from the operating system of the network device, so that the number of the sub-storage spaces is as same as the total number of the processing progresses. In addition, technicians may preset the size of each sub-storage space and write it into the configuration file. In such way, based on the size of each sub-storage space and the total number of the processing progresses, the first processing progress may apply for the target storage space with corresponding size from the operating system of the network device.

Step 203, when the second processing progress starts, it may determine the target sub-storage space in the plurality of sub-storage spaces and perform the service data processing based on the target sub-storage space.

The second processing progress is any processing progress which is different from the first processing progress.

In one embodiment, after the second processing progress starts, it may search the shared structure created by the first processing progress. Specifically, the default identification information may be set for the shared structure when the first processing progress creates the shared structure, so that the second processing progress may find the shared structure according to the default identification information. Further, the second processing progress may determine the target sub-storage space labeled with the identification information of the second processing progress from the plurality of sub-storage spaces in the shared structure according to the identification information of the second processing progress. In such way, the second processing progress may process the service data based on the target sub-storage space. It can be understood that, based on the above processing, each processing progress may process the service data according to a sub-storage space in the target storage space.

Optionally, the processing progresses of service data based on the sub-storage space may be mainly divided into the reception phase of service data and the transmission phase of service data. The specific content may be the following respectively.

First, in the reception phase of service data: the second processing progress periodically detects the target sub-storage space; and if the target sub-storage space has the service data to-be-processed, the second processing progress acquires the service data to-be-processed and processes the service data to-be-processed.

In one embodiment, after each processing progress starts, it may acquire the service data to-be-processed (to-be-decapsulated) through the corresponding sub-storage space. Specifically, using the second processing progress as an example, after the second processing progress starts, it may periodically detect the target sub-storage space. If the target sub-storage space has the service data to-be-decapsulated, the second processing progress may extract the service data to-be-decapsulated and then decapsulate the service data to-be-decapsulated. Further, the second processing progress may provide the decapsulated service data to the corresponding project progress.

Optionally, the above service data to-be-processed may be that the virtual switch reads from the physical NIC and writes to the sub-storage space and the specific processing may be the following: acquiring the service data to-be-processed from the physical NIC by the virtual switch; and determining current loads of all processing progresses by the virtual switch and storing the service data to-be-processed into a sub-storage space corresponding to the processing progress with the lowest current load.

In one embodiment, after the external transmits the service data of a project progress to the network device, the physical NIC of the network device may receive the corresponding service data. In the scenario of the service data resolution, the service data may be the service data to-be-decapsulated after the encapsulation through multi-layer network communication protocol. Then, the virtual switch may acquire the service data to-be-decapsulated received by the physical NIC and determine the current loads of all processing progresses according to the current data size to-be-processed of each processing progress. Further, the virtual switch may select the processing progress with the lowest current load and store the service data to-be-decapsulated into the sub-storage space corresponding to the processing progress. If a plurality of processing progresses with the current load tied to the lowest exist, the virtual switch may randomly select a processing progress.

Second, in the transmission phase of service data: the second processing progress acquires the service data to-be-processed and processes the service data to-be-processed; and the second processing progress stores the processed service data into the target sub-storage space.

In one embodiment, the service data may be first provided to a processing progress for processing (encapsulation) when the project progress on the network device needs to transmit the service data to the external. Taking the second processing progress as an example, after the second processing progress acquires the service data to be encapsulated which is provided by the project progress, and may encapsulate the service data to be encapsulated. It is not difficult to think that if there are a plurality of processing progresses on the network device serving the above project progress, the project progress may select the processing progress with the lowest load from the plurality of processing progresses to process the service data based on the load balancing. After the second processing progress encapsulates the service data to be encapsulated, it may store the encapsulated service data into the corresponding target sub-storage space.

Optionally, the virtual switch may provide the processed service data in each sub-storage space to the physical NIC of the network device for sending and the specific processing may be the following: if a target sub-storage space in the plurality of sub-storage spaces is detected storing the processed service data, extracting the processed service data by the virtual switch and providing the processed service data to the physical NIC.

In one embodiment, after the first processing progress creates the target storage space, it may send the access address of the target storage space to the virtual switch. In such way, the virtual switch may periodically and orderly query whether the processed (encapsulated) service data is stored in the plurality of sub-storage spaces according to the access address of the target storage space. If the target sub-storage space in the plurality of sub-storage spaces is detected storing the encapsulated service data, the virtual switch may extract the encapsulated service data and then provide the encapsulated service data to the physical NIC on the network device, so that the physical NIC may transmit the encapsulated service data to the designated network address. In another case, the virtual switch may receive the corresponding prompt information when the target sub-storage space stores the service data to be encapsulated. Meanwhile, the virtual switch may also detect that encapsulated service data is stored in the target sub-storage space and may perform a subsequent processing.

In summary, on the one hand, the progress of processing received service data by the network device may be the following: the physical NIC receives the service data and the virtual switch acquires the service data, the service data is written in the sub-storage space though the Vhost/Virtio interface, the processing progress extracts the service data from the sub-storage space and processes the service data, the processed service data is provided to the project progress. On the other hand, the progress of processing service data to be transmitted by the network device may be the following: the processing progress acquires the service data to be transmitted from the project progress, and also processes the service data and stores the service data in the sub-storage space, and then the virtual switch read the service data in the sub-storage space through the Vhost/Virtio and the service data is transmitted by the physical NIC.

Optionally, the first processing progress performs a data negotiation with the Vhost to generate a negotiation result; the first processing progress set a shared sub-storage space in the plurality of sub-storage spaces and store the negotiation result in the shared sub-storage space; and after determining the target sub-storage space by the second processing progress, the second processing progress accesses the shared sub-storage space to acquire the stored negotiation result and initializes the target sub-storage space based on the negotiation result.

In one embodiment, the first processing progress calls the Virtio to establish a communication connection with the Vhost deployed on the virtual switch, and may also perform a data negotiation with the Vhost to generate a negotiation result, and the negotiation result may include underlying hardware characteristics of the network device and the parameter information of the target storage space (such as the size of target storage space, the access address and the number of the sub-storage spaces etc.). After the first processing progress divides the target storage space into a plurality of sub-storage spaces, it may set a shared sub-storage space in the plurality of sub-storage spaces, and then may store the above negotiation result in the shared sub-storage space. The structure of the target storage space may be shown in FIG. 3. Further, after the processing progress determines the sub-storage spaces respectively, it may first access the above shared sub-storage space, acquire the stored negotiation result, and perform an initialization process on the target sub-storage space based on the negotiation result.

In embodiments of the present invention, when the first processing progress starts, it calls the Virtio to establish a communication connection with the Vhost deployed in the virtual switch; the first processing progress applies for the target storage space and divides the target storage space into a plurality of storage spaces; when the second processing progress starts, it determines the target sub-storage space in the plurality of sub-storage spaces and processes the service data based on the target sub-storage space. In such way, a processing progress calls the Virtio to establish a communication connection with the Vhost interface, and a plurality of processing progresses use the above same communication connection to implement the transmission and reception of the service data through the shared storage space method. There is no need to use the plurality of processing progresses to call the Virtio alternatively to establish the communication connection with the Vhost interface, so that processing resources of the network device is saved and the efficiency of processing the service data is ensured.

Based on the same technical concept, embodiment of the present invention further provides a network device for processing service data, and the network device is configured with a virtual switch and performs a plurality of processing progresses, where:
The first processing progress of the plurality of processing progresses is configured to call a Virtio to establish a communication connection with a Vhost deployed on the virtual switch when the first processing progress starts;
The first processing progress is configured to apply for a target storage space and divide the target storage space into a plurality of sub-storage spaces; and
The second processing progress of the plurality of processing progresses is configured to determine a target sub-storage space in the plurality of sub-storage spaces and process the service data based on the target sub-storage space when the second processing progress starts.

Optionally, the second processing progress is configured to: periodically detect the target sub-storage space; and if the target sub-storage space has service data to-be-processed, acquire the service data to-be-processed and process the service data to-be-processed.

Optionally, the network device is configured with a physical NIC, where: the virtual switch is configured for acquiring the service data to-be-processed received by the physical NIC, determining the current loads of all processing progresses, and storing the service data to-be-processed into the sub-storage space according to the processing progress with the lowest current load.

Optionally, the second processing progress is configured to: acquire the service data to-be-processed and process the service data to-be-processed; and store the processed service data into the target sub-storage space.

Optionally, the network device is configured with a physical NIC, where: if a target sub-storage space in the plurality of sub-storage spaces is detected storing the processed service data, the virtual switch extracts the processed service data and provides the processed service data to the physical NIC.

Optionally, the first processing progress is configured to: read a preset configuration file and determine the total number of the processing progresses; and apply for a target storage space and divide the target storage space into a plurality of sub-storage spaces according to the total number of the processing progresses.

Optionally, the first processing progress is configured to perform a data negotiation with the Vhost to generate a negotiation result; set a shared sub-storage space in the plurality of sub-storage spaces and store the negotiation result in the shared sub-storage space using the first processing progress; and after determining the target sub-storage space, the second processing progress is configured to access the shared sub-storage space to acquire the stored negotiation result and initialize the target sub-storage space based on the negotiation result.

In embodiments of the present invention, when the first processing progress starts, it calls the Virtio to establish a communication connection with a Vhost deployed on the virtual switch; the first processing progress applies for a target storage space and divides the target storage space into the plurality of sub-storage spaces; when the second processing progress starts, it determines a target sub-storage space in the plurality of sub-storage spaces and processes the service data based on the target sub-storage space. In such way, a processing progress calls the Virtio to establish a communication connection with the Vhost interface, and the plurality of processing progresses use the above same communication connection to implement the transmission and reception of the service data through the shared storage space method. There is no need to use the plurality of processing progresses to call the Virtio alternatively to establish the communication connection with the Vhost interface, so that processing resources of the network device is saved and the efficiency of processing the service data is ensured.

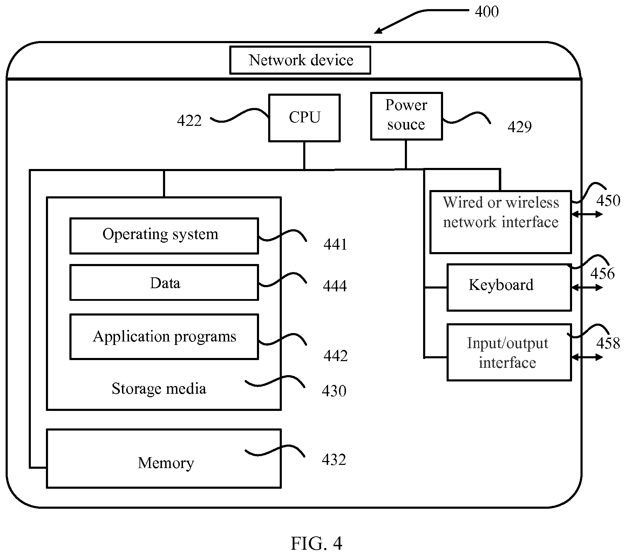

FIG. 4 illustrates a structural schematic of a network device according to embodiments of the present invention. The network device 400 may vary considerably depending on different configurations and performances, and may include one or more central processing units 422 (for example, one or more processors) and memories 432, one or more storage media 430 (for example, one or more mass storage devices) that store application programs 442 or data 444. The memory 432 and the storage media 430 may be temporary storage or permanent storage. Programs stored on the storage media 430 may include one or more modules (not shown in the figure) and each module may include a series of instructions and operations on the network device. Further, the central processing unit 422 may be configured to communicate with the storage media 430 and execute a series of instructions and operations in the storage media 430 on the network device 400.

The network device 400 may also include one or more power sources 429, one or more wired or wireless interfaces 450, one or more input and output interfaces 458, one or more keyboards 456, and/or one or more operating systems 441 such as Windows ServerTM, Mac OS XTM, UnixTM, LinuxTM, FreeBSDTM etc.

The network device 400 may also include a memory, one or more programs where one or more programs are stored in the memory and are configured to execute instructions of processing the above service data which are included in one or more programs through one or more processors.

Those skilled in the art may clearly understand that all or part of steps of embodiments may be implemented by means of hardware or may be implemented by programs to instruct related hardware. The programs may be stored in computer readable storage media. The storage media may be read-only memory, magnetic disks or optical disks etc.

The foregoing is merely some preferred embodiments of the present disclosure, and is not intended to limit the protection scope of the present disclosure. Any modifications, equivalent substitutions, and improvements, etc. shall fall within the scope of the present disclosure.

## Claims

1. A method for processing service data, comprising:
calling (201), by a first process, a Virtio to establish a communication connection with a Vhost deployed on a virtual switch when the first process starts;
applying (202) for, by the first process, a target storage space and dividing, by the first process, the target storage space into a plurality of sub-storage spaces; and
determining (203), by a second process, a target sub-storage space in the plurality sub-storage spaces and processing, by the second process, the service data based on the target sub-storage space when the second process starts.

2. The method according to claim 1, **characterized in that** the processing of the service data based on the target sub-storage space includes:
periodically detecting the target sub-storage space by the second process; and
if the target sub-storage space contains service data to-be-processed, acquiring the service data to-be-processed and processing the service data to-be-processed by the second process.

3. The method according to claim 2, wherein the method further includes:
acquiring the service data to-be-processed from a physical network interface card (NIC) by the virtual switch; and
determining current loads of all processes by the virtual switch and storing the service data to-be-processed into a sub-storage space corresponding to a process with a lowest current load.

4. The method according to claim 1, wherein the processing of the service data based on the target sub-storage space includes:
acquiring the service data to-be-processed and processing the service data to-be-processed by the second process; and
storing the processed service data into the target sub-storage space by the second process.

5. The method according to claim 4, wherein the method further includes:
if a target sub-storage space in the plurality of sub-storage spaces is detected storing the processed service data, extracting the processed service data by the virtual switch and providing the processed service data to the physical NIC.

6. The method according to claim 1, wherein applying for the target storage space by the first process and dividing the target storage space into a plurality of sub-storage spaces includes:
reading a preset configuration file by the first process and determining a total number of processes; and
applying for the target storage space by the first process and dividing the target storage space into the plurality of sub-storage spaces according to the total number of the processes.

7. The method according to claim 1, wherein the method further includes:
performing a data negotiation with the Vhost to generate a negotiation result by the first process;
setting a shared sub-storage space in the plurality of sub-storage spaces and storing the negotiation result in the shared sub-storage space by the first process; and
after determining the target sub-storage space by the second process, accessing the shared sub-storage space to acquire the stored negotiation result and initializing the target sub-storage space based on the negotiation result.

8. A network device (400) for processing service data, wherein the network device is configured with a virtual switch and performs a plurality of processes, wherein:
a first process of the plurality of processes is configured to call a Virtio to establish a communication connection with a Vhost deployed on the virtual switch when the first process starts;
the first process is configured to apply for a target storage space and divides the target storage space into a plurality of sub-storage spaces; and
a second process of the plurality of processes is configured to determine a target sub-storage space in the plurality of sub-storage spaces and process the service data based on the target sub-storage space when the second process starts.

9. The network device according to claim 8, wherein the second process is configured to:
periodically detect the target sub-storage space; and
if the target sub-storage space contains the service data to-be-processed, acquire the service data to-be-processed and process the service data to-be-processed.

10. The network device according to claim 9, wherein the network device is configured with a physical NIC, wherein:
the virtual switch is configured to acquire the service data to-be-processed received by the physical NIC, determine the current loads of all processes, and store the service data to-be-processed into the sub-storage space according to the process with the lowest current load.

11. The network device according to claim 8, wherein the second process is configured to:
acquire the service data to-be-processed and process the service data to-be-processed; and
store the processed service data into the target sub-storage space.

12. The network device according to claim 11, wherein the network device is configured with a physical NIC (450), wherein:
if a target sub-storage space in the plurality of sub-storage spaces is detected storing the processed service data, the virtual switch extracts the processed service data and provides the processed service data to the physical NIC.

13. The network device according to claim 8, wherein the first process is configured to:
read a preset configuration file and determine the total number of the processes; and
apply for a target storage space and divide the target storage space into a plurality of sub-storage spaces according to the total number of the processes.

14. The network device according to claim 8, wherein:
the first process is configured to perform a data negotiation with the Vhost to generate a negotiation result using, and set a shared sub-storage space in the plurality of sub-storage spaces and store the negotiation result in the shared sub-storage space using the first process; and
after determining the target sub-storage space, the second process is configured to access the shared sub-storage space to acquire the stored negotiation result and initialize the target sub-storage space based on the negotiation result.

## Patentansprüche

1. Eine Methode zur Verarbeitung von Servicedaten, die Folgendes umfasst:
Aufruf (201) durch den ersten Prozess eines Virtios zum Bilden eines Kommunikationsanschlusses mit einem Vhost an einem virtuellen Schalter bei Starten des ersten Prozesses;
Anforderung (202) durch den ersten Prozess eines Zielspeicherplatzes und Aufteilung mittels des ersten Prozesses des Zielspeicherplatzes in eine Vielzahl von Unterspeicherplätzen; und
Bestimmung (203) durch einen zweiten Prozess eines Zielunterspeicherplatzes in der Vielzahl von Unterspeicherplätzen und Verarbeitung der Servicedaten durch den zweiten Prozess basierend auf dem Zielunterspeicherplatz bei Starten des zweiten Prozesses.

2. Die Methode gemäss Anspruch 1, **dadurch gekennzeichnet, dass** die Verarbeitung der Servicedaten basierend auf dem Zielunterspeicherplatz Folgendes einschlisst:
Regelmässiges Erkennen des Zielunterspeicherplatzes durch den zweiten Prozess; und,
wenn der Zielspeicherplatz zu verarbeitende Servicedaten enthält, Erhalt der zu verarbeitenden Servicedaten und Verarbeitung der zu verarbeitenden Servicedaten durch den zweiten Prozess.

3. Die Methode gemäss Anspruch 2, wobei die Methode weiter Folgendes einschliesst:
Erhalt der zu verarbeitenden Servicedaten aus einer physischen Netzwerk-Schnittstellenrkarte (NIC) durch einen virtuellen Schalter; und
Bestimmung der aktuelle Lasten aller Prozesse durch den virtuellen Schalter und Speichern der zu verarbeitenden Servicedaten in einem Unterspeicherplatz entsprechend einem Prozess mit der geringsten aktuelle Laste.

4. Die Methode gemäss Anspruch 1, bei der die Verarbeitung der Servicedaten basierend auf dem Zielunterspeicherplatz Folgendes einschliesst::
Erhalt der zu verarbeitenden Servicedaten und die Verarbeitung der Servicedaten, die im zweiten Prozess verarbeitet werden müssen; und
Speicherung durch den zweiten Prozess der verarbeiteten Servicedaten in dem Zielunterspeicherplatz.

5. Die Methode gemäss Anspruch 4, wobei die Methode weiter Folgendes einschliesst:
Wenn ein Zielunterspeicherplatz in der Vielzahl der Unterspeicherplätze festgestellt wird, werden die bearbeitenden Servicedaten gespeichert, wird der virtuelle Schalter die bearbeitenden Servicedaten extrahieren und die bearbeitenden Servicedaten werden der physichen NIC bereitgestellt.

6. Die Methode gemäss Anspruch 1, bei der die Anforderung des Zielspeicherplatzes durch den ersten Prozess und die Aufteilung des Zielspeicherplatzes in eine Vielzahl von Unterspeicherplätzen Folgendes einschliesst:
Lesen einer voreingestellten Konfiguration durch den ersten Prozess und Bestimmung der Gesamtanzahl von Prozessen; und
Anforderung des Zielspeicherplatzes durch den ersten Prozess und Aufteilen des Zielspeicherplatzes in eine Vielzahl von Unterspeicherplätzen übereinstimmend mit der Gesamtanzahl von Prozessen.

7. Die Methode gemäss Anspruch 1, wobei die Methode weiter Folgendes einschliesst:
Durchführung einer Datenverhandlung mit dem Vhost zur Erzeugung eines Verhandlungsergebnisses durch den ersten Prozess;
Einrichtung eines gemeinsamen Unterspeicherplatzes in der Vielzahl von Unterspeicherplätzen und Speichern des Verhandlungsergebnisses in dem gemeinsamen Unterspeicherplatz durch den ersten Prozess; und
nach Bestimmung des Zielunterspeicherplatzes durch den zweiten Prozess, Zugriff zu dem gemeinsamen Unterspeicherplatz zum Erhalt des gespeicherten Verhandlungsergebnisses und Initialisierung des Zielunterspeicherplatzes basierend auf dem Verhandlungsergebnis.

8. Eine Netzwerkvorrichtung (400) für die Verarbeitung von Servicedaten, wobei die Netzwerkvorrichtung mit einerm virtuellen Schalter konfiguriert ist und eine Vielzahl an Prozessen ausführt, wobei
ein erster Prozess der Vielzahl von Prozessen so konfiguriert ist, dass er einen Virtio aufruft, um eine Kommunikationsverbindung mit einem in dem virtuellen Schalter bereitgestellten Vhost herzustellen, wenn der erste Prozess startet;
der erste Prozess so konfiguriert ist, dass er einen Zielspeicherplatz anfordert und den Zielspeicherplatz in eine Vielzahl von Unterspeicherplätzen aufteilt; und
ein zweiter Prozess von einer Vielzahl von Prozessen so konfiguriert ist, dass er einen Zielunterspeicherplatz in der Vielzahl von Unterspeicherplätzen bestimmt und die Servicedaten basierend auf dem Zielunterspeicherplatz verarbeitet, wenn der zweite Prozess startet.

9. Die Netzwerkvorrichtung gemäss Anspruch 8, bei der der zweite Prozess so konfiguriert ist, dass er regelmässig den Zielunterspeicherplatz ermittelt; und
wenn der Zielunterspeicherplatz die zu verarbeitenden Servicedaten enthält, dass er die zu verarbeitenden Servicedaten erfasst und die zu verarbeitenden Servicedaten verarbeitet.

10. Die Netzwerkvorrichtung gemäss Anspruch 9, wobei die Netzwerkvorrichtung mit einer physischen NIC konfiguriert ist, wobei der virtuelle Schalter so konfiguriert ist, dass er die von der physischen NIC empfangenen, zu verarbeitenden Servicedaten erfasst, die aktuelle Lasten aller Prozesse bestimmt und die zu verarbeitenden Servicedaten in dem Unterspeicherplatz übereinstimmend mit dem Prozess mit der geringsten aktuelle Laste speichert.

11. Die Netzwerkvorrichtung gemäss Anspruch 8, bei der der zweite Prozess so konfiguriert ist, dass er die zu verarbeitenden Servicedaten erfasst und die zu verarbeitenden Servicedaten bearbeitet und die verarbeiteten Servicedaten in dem Zielunterspeicherplatz speichert.

12. Die Netzwerkvorrichtung gemäss Anspruch 1,, wobei die Netzwerkvorrichtung mit einer physischen NIC (450) konfiguriert ist, wobei
Wenn ein Zielunterspeicherplatz in der Vielzahl von Unterspeicherplätzen festgestellt wird, werden die bearbeitenden Servicedaten gespeichert, wird der virtuelle Schalter die bearbeitenden Servicedaten extrahieren und die bearbeitenden Servicedaten werden der physichen NIC bereitgestellt.

13. Die Netzwerkvorrichtung gemäss Anspruch 8, bei der der erste Prozess so konfiguriert ist, dass er eine voreingestellte Konfigurationsdatei liest und die Gesamtanzahl an Prozessen bestimmt; und einen Zielspeicherplatz anfordert und den Zielspeicherplatz in eine Vielzahl von Unterspeicherplätzen übereinstimmend mit der Gesamtanzahl an Prozessen aufteilt.

14. Die Netzwerkvorrichtung gemäss Anspruch 8, bei der der erste Prozess so konfiguriert ist, dass er mit dem Vhost eine Datenverhandlung ausführt, um eine Verhandlungsergebnis zu erzeugen, einen gemeinsamen Unterspeicherplatz in der Vielzahl an Unterspeicherplätzen einzurichten und das Verhandlungsergebnis in dem gemeinsamen Unterspeicherplatz mittels des ersten Prozesses zu speichern; und
nach Bestimmung des Zielunterspeicherplatzes ist der zweite Prozess so konfiguriert, dass er auf den gemeinsamen Unterspeicherplatz Zugriff hat, um das gespeicherte Verhandlungsergebnis zu erhalten und den Zielunterspeicherplatz basierend auf dem Verhandlungsergebnis zu initialisieren.

## Revendications

1. Une méthode de traitement de données de service comprenant les pas suivants:
appeler (201), par un premier processus, une Virtio pour établir une connexion de communication avec un Vhost déployé sur un commutateur virtuel lorsque le premier processus démarre;
demander (202), par le premier processus, un espace de stockage cible et diviser, par le premier processus, l'espace de stockage cible en une pluralité d'espaces de sous-stockage; et
déterminer (203), par un deuxième processus, un espace de sous-stockage cible dans la pluralité d'espaces de sous-stockage et traiter, par le deuxième processus, les données de service basées sur l'espace de sous-stockage cible lorsque le deuxième processus démarre.

2. La méthode conformément à la revendication 1, **caractérisée en ce que** le traitement des données de service basées sur l'espace de sous-stockage cible comprend les pas suivants:
détecter périodiquement l'espace de sous-stockage cible par le deuxième processus; et
si l'espace de sous-stockage cible contient des données de service à traiter, acquérir les données de service à traiter et traiter les données de service à traiter par le deuxième processus.

3. La méthode conformément à la revendication 2, comprenant en outre les pas suivants:
acquérir les données de service à traiter d'une carte d'interface réseau physique (NIC) par le commutateur virtuel; et
déterminer les chargements en cours de tous les processus par le commutateur virtuel et stocker les données de service à traiter dans un espace de sous-stockage correspondant à un processus ayant le chargement en cours le plus petit.

4. La méthode conformément à la revendication 1, où le traitement des données de service basées sur l'espace de sous-stockage cible comprend les pas suivants:
acquérir les données de service à traiter et traiter les données de service à traiter par le deuxième processus; et
stocker les données de service traitées dans l'espace de sous-stockage cible par le deuxième processus.

5. La méthode conformément à la revendication 4, comprenant en outre les pas suivants:
si on détecte qu'un espace de sous-stockage cible, dans la pluralité d'espaces de sous-stockage, stocke les données de service traitées, extraire les données de service traitées par le commutateur virtuel et fournir les données de service traitées à la NIC physique.

6. La méthode conformément à la revendication 1, où la demande d'espace de stockage cible par le premier processus et la division de l'espace de stockage cible en une pluralité d'espaces de sous-stockage comprennent les pas suivants:
lire un fichier de configuration prédéfinie par le premier processus et déterminer le nombre total de processus; et
demander l'espace de stockage cible par le premier processus et diviser l'espace de stockage cible en une pluralité d'espaces de sous-stockage conformément au nombre total de processus.

7. La méthode conformément à la revendication 1, comprenant en outre les pas suivants:
exécuter une négociation de données avec le Vhost pour générer les résultats de la négociation par le premier processus;
établir un espace de sous-stockage partagé dans la pluralité d'espaces de sous-stockage et stocker les résultats de la négociation dans l'espace de sous-stockage partagé par le premier processus; et
après avoir déterminé l'espace de sous-stockage cible par le deuxième processus, accéder à l'espace de sous-stockage partagé pour acquérir les résultats de la négociation stockés et initialiser l'espace de sous-stockage cible basé sur les résultats de la négociation.

8. Un dispositif de réseau (400) pour traiter les données de service, où le dispositif de réseau est configuré avec un commutateur virtuel et il exécute une pluralité de processus, où:
un premier processus de la pluralité de processus est configuré pour appeler une Virtio afin d'établir une connexion de communication avec un Vhost déployé sur le commutateur virtuel lorsque le premier processus démarre;
le premier processus est configuré pour demander un espace de stockage cible et diviser l'espace de stockage cible en une pluralité d'espaces de sous-stockage; et
un deuxième processus de la pluralité de processus est configuré pour déterminer un espace de sous-stockage cible dans la pluralité d'espaces de sous-stockage et traiter les données de service basées sur l'espace de sous-stockage cible lorsque le deuxième processus démarre.

9. Le dispositif de réseau conformément à la revendication 8, où le deuxième processus est configuré pour:
détecter périodiquement l'espace de sous-stockage cible; et
si l'espace de sous-stockage cible contient des données de service à traiter, acquérir les données de service à traiter et traiter les données de service à traiter.

10. Le dispositif de réseau conformément à la revendication 9, où le dispositif de réseau est configuré avec une NIC physique, où:
le commutateur virtuel est configuré pour acquérir les données de service à traiter reçues par la NIC physique, déterminer les chargements en cours de tous les processus et stocker les données de service à traiter dans un espace de sous-stockage conformément au processus ayant le chargement en cours le plus petit.

11. Le dispositif de réseau conformément à la revendication 8, où le deuxième processus est configuré pour:
acquérir les données de service à traiter et traiter les données de service à traiter; et stocker les données de service traitées dans l'espace de sous-stockage cible.

12. Le dispositif de réseau conformément à la revendication 11, où le dispositif de réseau est configuré avec une NIC physique, où:
si on détecte qu'un espace de sous-stockage cible, dans la pluralité d'espaces de sous-stockage, stocke des données de service traitées, le commutateur virtuel effectue une extraction des données de service traitées et fournit les données de service traitées à la NIC physique.

13. Le dispositif de réseau conformément à la revendication 8, où le premier processus est configuré pour:
lire un fichier de configuration prédéfinie et déterminer le nombre total de processus; et
demander un espace de stockage cible et diviser l'espace de stockage cible en une pluralité d'espaces de sous-stockage conformément au nombre total de processus.

14. Le dispositif de réseau conformément à la revendication 8, où:
le premier processus est configuré pour exécuter une négociation de données avec le Vhost pour générer les résultats de la négociation, et établir un espace de sous-stockage partagé dans la pluralité d'espaces de sous-stockage et stocker les résultats de la négociation dans l'espace de sous-stockage partagé, en utilisant le premier processus; et
après avoir déterminé l'espace de sous-stockage cible, le deuxième processus est configuré pour accéder à l'espace de sous-stockage partagé pour acquérir les résultats de la négociation stockés et initialiser l'espace de sous-stockage cible basé sur les résultats de la négociation.
